# EUROPÄISCHE PATENTSCHRIFT

(11) **EP 1 081 919 B1**
(45) Veröffentlichungstag und Bekanntmachung des Hinweises auf die Patenterteilung: **14.02.2007**
(21) Anmeldenummer: 99117553.0
(22) Anmeldetag: 06.09.1999
(51) Int. Cl.: H04L 29/06, G07F 19/00

(54) **Verfahren zur Autorisierung in Datenübertragungssystemen zur Bezahlung von über das Internet angebotenen Waren und/oder Dienstleistungen**
Method to give authorization for payments of goods and/or services bought over the Internet in data transmission systems
Méthode pour donner une autorisation pour le payment de biens et/ou services achetés sur Internet dans des réseaux de transmission de données

(43) Veröffentlichungstag der Anmeldung: 07.03.2001
(73) Patentinhaber: GEBIT Solutions GmbH, 10709 Berlin (DE)
(72) Erfinder: Krauss, Timo, 14532 Kleinmachnow (DE)
(74) Vertreter: Hoffmann, Klaus-Dieter

(56) Entgegenhaltungen:
- EP-A- 0 708 547
- EP-A- 0 780 802
- EP-A- 0 848 361
- WO-A-99/42961

## Beschreibung

Die Erfindung betrifft eine Verfahren zur Autorisierung in Datenübertragungssystemen zur Bezahlung von über das Internet angebotenen Waren und/oder Dienstleistungen unter Verwendung mindestens eines eine Transaktion identifizierenden Merkmals.

Der elektronische Handel, spezifisch das sogenannte "Business to Customers" Segment entwickelt sich teilweise nur sehr zögerlich. Der Hauptgrund für diese sich langsamer als prognostiziert darstellende Entwicklung ist zu großen Teilen in nicht sicheren bzw. zu umständlichen Verfahren der Bezahlung von Waren und Dienstleistungen zu sehen.

Bei einem aus der EP-A-0 708 547 bekannten Verfahren zur Autorisierung inDatenübertragungssystemen zur Bezahlung von angebotenen Waren und/oder Dienstleistungen findet ein Identifikationscode Verwendung.

Wird ein Produkt über das Internet ausgewählt, so lassen sich vereinfacht dargestellt grundsätzlich drei Wege der Bezahlungsmöglichkeiten im Internet als üblich identifizieren:
1. klassisches Verfahren wie Lieferung auf Rechnung, per Vorkasse und per Nachnahme
2. Kreditkarten
3. elektronisches Geld

### Zu 1. Klassische Verfahren

In Ermangelung besserer Alternativen weichen Internet-Anbieter häufig auf klassische Verfahren für das Bezahlen der Lieferung/Leistung aus. Die Abläufe bei diesen konventionellen Zahlungsverfahren, wie Nachnahme oder Lieferung auf Rechnung, sind selbsterklärend und allgemein bekannt. Auf die Darstellung der Vor- und Nachteile wird daher verzichtet.

### Zu 2. Kreditkarten

Kreditkarten (beispielsweise von Visa oder Mastercard) haben weltweit starke Verbreitung erreicht und werden von vielen Anbietern im Internet vielfach als Zahlungsmittel akzeptiert. Die Verkaufsabläufe sehen vereinfacht folgendermaßen aus:

Ein Kunde erwirbt bei einem Anbieter eine Ware oder eine Dienstleistung, der die Bezahlung per Kreditkarte ermöglicht. Der Kunde ist nun aufgefordert, seine Kreditkartendaten (Kartennummer, Name des Karteninhabers und Gültigkeitsdatum) in einem elektronischen Formular zu erfassen oder per Mail zu übertragen. Der Anbieter kann die eingegebenen Daten auf Plausibilität oder einen möglichen Sperrvermerk überprüfen. Ggf. erfolgt dies durch die technischen Systeme der Kreditkartenorganisation selbst. Übersteht die Kreditkarte diese Prüfung, bestätigt der Anbieter die Akzeptierung der Karte und somit indirekt auch der Bezahlung. Daran anschließend erfolgt die Lieferung der Ware bzw. Bereitstellung der Dienstleistung. Der Anbieter erhält von der Kreditkartenorganisation den entsprechenden Geldbetrag - abzüglich einer Provision - gutgeschrieben. Der Kunde entrichtet den Betrag an die Kartenorganisation.

Nachteilig bei diesem Verfahren ist, daß die Authentifizierung des Kunden einzig über die Überprüfung der Kartendaten (Plausibilität, Sperrvermerke) erfolgt. Da die Kartendaten für jedermann leicht erkenntlich auf einer Kreditkarte aufgedruckt sind und im Zuge der Benutzung in Geschäften, Tankstellen, Restaurants etc. vielen Dritten bekannt gemacht werden, kann ein Anbieter niemals sicherstellen, daß ein Einkauf nicht vom Karteninhaber selbst, sondern von jemanden Dritten widerrechtlich getätigt wird. Auch der Karteneigentümer kann eigentlich überhaupt nie sicherstellen, daß nicht ohne seines Wissens auf seinen Namen und seine Rechnung Käufe getätigt werden. Nur wenn seine Karte komplett entwendet worden ist, kann mit hoher Wahrscheinlichkeit von einem anstehenden Mißbrauch ausgegangen werden. Für diesen Fall obliegt ihm die sofortige Sperrung der Karte. Auch wenn dann ein Anbieter das Einholen einer Autorisierung unterläßt (das ist i.d.R. immer dann der Fall, wenn Transaktionsbelege per "Ritsch-Ratsch-Maschine" händisch erstellt werden), ist die Haftung für den Karteninhaber begrenzt.

Bei mißbräuchlicher Nutzung einer Kreditkarte außerhalb des Internets, z.B. im Geschäft, kann die obligatorische Unterschrift auf dem für jede Kreditkartentransaktion notwendige physischen Beleg bei Streitigkeiten ein wichtiges Beweismittel darstellen. Auf eine händische Unterschrift wird bzw. muß aus technischen Gründen heute noch bei Käufen über das Internet verzichtet bzw. verzichtet werden. Die Beweislast für den Inhaber einer mißbräuchlich genutzten Kreditkarte liegt für Käufe im Internet auf seiner Seite und ist i.d.R. von der Kulanz der Kreditkartenorganisation abhängig, ob diese einen eingetretenen Schaden übernimmt.

Vor dem Hintergrund des hier beschriebenen ist es bald als nebensächlich einzustufen, daß heute als Kernproblem beim Bezahlen per Kreditkarte im Internet die eventuell unverschlüsselte Übertragung der Karteninformationen über das Internet als sicherheitskritisch eingestuft wird. Diesem Aspekt wird heute vielfach dadurch begegnet, daß für den Vorgang der Übertragung von Kreditkartendaten eine verschlüsselte Verbindung (bsp. über SSL - Secure Socket Layer) genutzt wird. Hierdurch soll es einem Dritten sehr schwer gemacht werden, die Übertragung zwischen Anbieter und Kunden abzuhören, die Datenpakete zu entschlüsseln und die Karteninformationen schlußendlich mißbräuchlich zu nutzen.

### Zu 3. elektronisches Geld

Beim elektronischen Geld wird meistens versucht, physisches Geld durch elektronische Geldbörsen nachzubilden. Bekannte Verfahren sind u.a. Mondex und DigiCash. Dabei kann wiederum unterschieden werden in zwei Verfahren. Jene, die eine Geldtransaktion über eine Clearingstelle (i.d.R. einer Bank) abwickeln und solche, bei denen ein Kunde eine direkte Bezahlung mit virtuellem Geld beim Anbieter vornimmt. Der Anbieter wiederum leitet die erhaltene elektronische Zahlung an eine Bank weiter und erhält dort den entsprechenden Gegenwert gutgeschrieben oder ausgezahlt.

So interessant diese Ansätze sind, bestehen derzeit noch diverse Hürden, die ihren Einsatz stark bremsen. Festzuhalten ist, daß sich noch keines der Verfahren flächendeckend etablieren konnte bzw. als Standard etabliert ist. Weiterhin muß ein Nutzer i.d.R. spezielle Softwareprodukte auf seinem PC installieren, um über eines der elektronischen Bezahlungsverfahren einen Kauf tätigen zu können. Die Installation von Software auf einem speziellen Endgerät (i.d.R. PC) führt zu vielfältigen Problemen wie dem Verlust von Flexibilität bei der Endgerätenutzung oder den klassischen Installationsproblemen und ggf. Datenverlusten. Zur Erhöhung der Sicherheit von derartigen Zahlungssystemen wird auch der Anschluß spezieller Hardware - z.B. Chipkartenleser - an das Endgerät des Internet-Nutzers empfohlen oder gar als Voraussetzung gesehen. Nachteilig an elektronischem Geld ist weiterhin, daß derartige neue Zahlungssysteme sowie sich anschließende Verfahren selbst für Fachleute nicht ohne weiteres nachvollziehbar sind. Dies führt zu einer starken Verunsicherung potentieller Anbieter und Kunden im Internet.

Die vorliegende Erfindung geht davon aus, daß es bei einem Verfahren zur Autorisierung in Datenübertragungssystemen von Bezahlungsvorgängen oder sonstigen Transaktionen erforderlich ist, daß der Käufer eindeutig als jener identifiziert werden kann, der er vorgibt zu sein. Dabei geht es jedoch weniger um eindeutige Identifizierung der Person (für anonyme Käufer eher kontraproduktiv) als um grundsätzliches Sicherstellen, daß nicht auf Namen und Rechnung eines Dritten Käufe getätigt werden können.

Im kartenbasierten Zahlungsverkehr der weit verbreiteten EC-Karte wird auf eine nur dem Karteninhaber bekannte PIN als Autorisierungsmerkmal gesetzt. Trotz immer wieder auftretender Behauptung, daß die PIN einer Karte aus den Daten des ebenfalls auf der EC-Karte enthaltenen Magnetstreifens ermittelt werden kann, gelten Zahlungstransaktionen mit der EC-Karte in Verbindung mit der PIN als sehr zuverlässig und sicher. Wer im Besitz einer EC-Karte mit zugehöriger PIN ist, gilt im Sinne des Verfahrens als einzig möglicher und autorisierter Nutzer.

Chip-Karten, wie sie in Mobilfunktelefonen zum Einsatz kommen, sind ebenfalls nur durch eine dem Karteninhaber bekannte PIN nutzbar. Der Zugang zu einem Handy ist technisch somit als ebenso sicher einzustufen wie die Bezahlung per EC-Karte und zugehöriger PIN. Die Erfindung macht sich diese Eigenschaft von Mobilfunktelefonen zunutze, d.h., die Autorisierung und Abrechnung einer Transaktion erfolgt über ein Handy bzw. das Mobilfunknetz und dessen Betreiber, wobei der Aspekt von Mobilfunknetzen ausgenutzt wird, daß ein sehr hoher Zugangsschutz zum Mobilfunknetz selbst existiert.

Einen zweiten, für die vorliegende Erfindung geeignet ausnutzbaren Aspekt von Mobilfunknetzen stellt die Identifizierbarkeit eines Anrufers dar. Das erstmals mit dem ISDN-Protokoll eingeführte Dienstmerkmal in Kommunikationsnetzen ermöglicht es, dem Angerufenen die Telefonnummer des Anrufers anzuzeigen. Dieses nicht manipulierbare Dienstmerkmal existiert auch in heutigen Mobilfunknetzen. (Der Vollständigkeit halber sei erwähnt, daß ein Kunde die Entscheidungsmöglichkeit hat, das Dienstmerkmal abzuschalten. Dem Angerufenen bleibt die Rufnummer somit verborgen. Innerhalb des internen Kommunikationsprotokolls des Netzes ist der Anrufer jedoch weiterhin identifiziert).

Der Erfindung liegt somit die Aufgabe zugrunde, ein Verfahren der eingangs erwähnten Art zur Verfügung zu stellen, mit dem eine sichere Autorisierung von Transaktionen und somit eine sichere Bezahlung im Internet realisiert werden kann.

Diese Aufgabe wird erfindungsgemäß durch die im Patentanspruch 1 beschriebene technische Lehre gelöst.

Vorteilhafte Weiterbildungen des erfindungsgemäßen Verfahrens ergeben sich aus den Patentansprüchen 2 bis 14.

Das erfindungsgemäße Verfahren
a) ermöglicht eine sichere und einfache Bezahlung im Internet,
b) ist für Konsumenten und Anbieter leicht zu verstehen und einzusetzen,
c) schützt Kunden und Anbieter vor Mißbrauch,
d) ist unabhängig von auf Kundenseite eingesetzen Endgeräten (HW/SW, Betriebssystem),
e) verursacht geringe technische Transaktionskosten und erweitert das Dienstleistungsangebot der am Verfahren beteiligten Organisationen,
f) kann orts- und providerunabhängig vom Kunden genutzt werden und ist auch für internationale Transaktionen geeignet.

Die das Autorisierungssystem betreibende Organisation kann anstelle des (Mobilfunk-) Telefondienstanbieters auch der Anbieter selbst oder eine vom Anbieter und (Mobilfunk-) Telefondienstanbieter unabhängige Organisation sein.

Zu den oben angeführten Kriterien ist im einzelnen folgendes zu sagen:

### a) Sichere Bezahlung

(Mobilfunk-) Telefondienstanbieter besitzen i.d.R. eine sehr hohe Reputation. Anbieter können sich also darauf verlassen, daß Beträge, die auf ihre Veranlassung und durch erfindungsgemäße Autorisierung durch den Kunden hin eingezogen werden, auch tatsächlich dem Anbieter zur Verfügung gestellt werden. Durch die explizite Bestätigung der Transaktion durch den Käufer kann das Mobilfunkunternehmen wiederum sicher sein, nicht unberechtigterweise Beträge vom Kunden einzuziehen.

### b) Leichte Verständlichkeit und Nutzung für Konsumenten und Anbieter

Die Nutzung eines (Mobilfunk-)Telefons, die Anwahl einer speziellen Rufnummer und die Eingabe einer Transaktionsnummer und ggf. einer PIN über die Zifferntastatur eines (Mobilfunk)-Telefonendgerätes stellen keine Nutzungsbarrieren dar. Beide Seiten, Anbieter und Käufer, können sehr leicht nachvollziehen, wie die Transaktion abläuft. Konsumenten kennen das Inkasso von telefonfremden Produkten/Diensten bereits vom herkömmlichen BTX-System der Telekom AG (mit den individuellen Seitenabrufgebühren) sowie den vielfältigen 0190x-Diensten für Gewinnspiele, Börsenkursabfragen, Wetterinformationen, Download und Kauf von Treibern und Updates usw.

### c) Schutz von Kunden und Anbieter vor Mißbrauch

Der Zugang und die Nutzung eines Mobilfunktelefons ist durch eine Chip-Karte mit zugehöriger PIN vor mißbräuchlicher Nutzung gesichert. Jeder Besitzer eines Mobilfunktelefons achtet im eigenen Interesse darauf, die PIN nicht anderen zu offenbaren, da diese im Falle des Zugriffs auf das Mobilfunktelefon dann auf Rechnung des Besitzers des letzteren telefonieren könnten. Es besteht also eine vergleichbar hohe Gewährleistung der Authentizität des Mobilfunktelefon-Nutzers wie bei einer EC-Karte.

Bei mehreren Nutzern eines Mobilfunktelefons mit ein und derselben Chip-Karte sind folglich auch allen Nutzern die PIN der Chipkarte bekannt. Auch in diesem Fall kann durch eine zusätzliche PIN, die mit dem (Mobilfunk)-Telefondienstanbieter für Internetkäufe vereinbart wird, eine mißbräuchliche Nutzung ausgeschlossen werden. Diese zusätzliche Möglichkeit der Erhöhung der Sicherheit gemäß der Erfindung käme auch wirksam zum Tragen, falls es in Zukunft möglich werden sollte, die PINs von Chipkarten unbefugt zu entschlüsseln

Die Identifikation des Kunden bzw. seines Mobilfunktelefonanschlusses erfolgt beim erfindungsgemäßen Verfahren über die CallerlD (ein Dienstmerkmal in Telefonnetzen) oder über spezielle andere technische Abrechnungssysteme, die vom (Mobilfunk)-Telefondienstanbieter für die Erstellung der Telefonrechnung genutzt werden. Es besteht keine Möglichkeit, das Netz eines (Mobilfunk)-Telefondienstanbieters zu nutzen, ohne bei diesem eindeutig identifiziert zu sein.

Beim Nutzen des beschriebenen Zahlverfahrens von Festnetz-Telefonen aus entfällt die eindeutige Identifikation durch den Besitzer/Nutzer. Telefonendgeräte besitzen heute noch keine SIM Karte mit entsprechenden Schutzfünktionen. In diesem Falle muß zur Wahrung der hohen Sicherheit beispielsweise jede Transaktion durch zusätzliche Bestätigung mit einer zwischen Festnetzanbieter und Kunden vereinbarten PIN abgesichert werden.

Zur weiteren Erhöhung der Sicherheit des erfindungsgemäßen Verfahrens können durch entsprechende Erweiterung des Autorisierungssystems auf Seiten der (Mobilfunk-) Telefondienstanbieter beliebig gestaltbare Autorisierungsinformationen Internet-Käufe limitieren. So könnte es z.B. sein, daß der Kunde nur ein bestimmtes Kreditlimit besitzt, den Betrag pro Transaktion begrenzt hat oder sich generell nicht für Internetkäufe hat freischalten lassen.

Da jedes über das Internet gesendete Datenpaket potentiell abgehört werden kann, ist nach Möglichkeit jeder als sicherheitsrelevant einzustufender Datenverkehr zwischen Kunden, Anbieter und den Autorisierungskomparator des Autorisierungssystems auf ein Minimum zu begrenzen. Die Erfindung stellt daher sicher, daß der Anbieter keinen direkten Zugriff auf daten des Abrechnungskontos des Kunden erhält und diese mißbräuchlich genutzt werden könnten.

Weiterhin bietet die Erfindung durch ein erweitertes Autorisierungssystem die Option, daß Lieferungen nur an eine bestimmte Lieferadresse gehen, die der Kunde mit seinem (Mobilfunk-) Telefondienstanbieter zuvor einmalig vereinbart hat. Dies könnte auch in Abhängigkeit zur Transaktionshöhe gekoppelt sein. Für Transaktionen ohne eine nachfolgende Lieferung von Waren ist es nicht notwendig, Anschriftendaten des Kunden an den Anbieter zu übermitteln.

### d) Unabhängigkeit von auf Kundenseite eingesetzten Endgeräten

Das erfindungsgemäße Verfahren ist völlig unabhängig vom Stand der technischen Ausstattung auf Seiten der Kunden, insbesondere von der Art des verwendeten Betriebssystems des Endgerätes, der darin enthaltenen CPU, dem eingesetzten Betriebssystem oder der Internet-Software und sonstigen Aspekten. Diese Situation ergibt sich aus dem Fehlen jeglicher speziell zu installierender Software. Ist das Endgerät des Kunden tauglich zum Aufruf des Internet-Angebotes des Anbieters, ist es somit auch tauglich für das erfindungsgemäße Verfahren. Weiterhin kann der Kunde die Transaktion gemäß der Erfindung mit jedem beliebigen (Mobilfunk-)Telefon abwickeln. Auch Modelle der ersten Generation sind für das erfindungsgemäße Verfahren geeignet, sofern sie einen Zugangsschutz zum Mobilfunktelefon über eine nicht ermittelbare PIN bieten und Anrufer mit ihrer Nummer identifizierbar sind.

### e) Geringer technische Transaktionskosten

Für die Verbreitung eines elektronischen Bezahlungsverfahrens sind geringe Transaktionskosten von hoher Bedeutung. Das erfindungsgemäße Verfahren ist für alle Beteiligten mit geringem technischen und personellen Aufwand implementierbar und bietet somit große Spielräume für geringe Transaktionskosten für den Anbieter. Weiterhin stellt das Anbieten eines Intemet-basierten Zahlungsverfahrens einen attraktiven Wettbewerbsvorteil für Betreiber von Autorisierungssystemen, insbesondere von (Mobilfunk-)Telefondienstanbietern dar.

### f) Orts-und Providerunabhängigkeit

Es ist heutzutage bei weitem nicht mehr so, daß Internetangebote nur vom heimischen Rechner oder vom Rechner der Arbeitsstätte aus genutzt werden (können). Personen, die von unterwegs (z.B. in einem Internetcafé) einen kostenpflichtigen Dienst nutzen oder eine Ware bestellen wollen, können gemäß der Erfindung dies auch tun. Dieser Vorteil ergibt sich wiederum daraus, daß keine spezielle Software auf einem definierten Endgerät installiert sein muß. Einzige Voraussetzung ist das Zustandekommen einer Funkverbindung zum Mobilfunkanbieter, über den die Bezahlung erfolgen soll. Gegenwärtig befinden sich Internet-fähige Mobilfunkendgeräte der ersten Generation auf dem Markt. Es zeichnet sich somit ab, daß die mobile Nutzung von Intemetangeboten direkt vom Mobilfunkendgerät zunehmen wird.

Über eine modifizierte Verfahrensweise kann die ortsunabhängige Nutzung des erfindungsgemäßen Verfahrens auch über Festnetzanschlüsse realisiert werden. Ein Schlüsselproblem stellt die eindeutige Identifizierung bzw. Legitimierung des Nutzers dar, die bei einem Festnetzanschluß nicht unbedingt gegeben ist. Auch wenn die Rufnummer des Anschlusses eindeutig identifiziert ist, so könnte ein beliebiger Dritter das Telefon unberechtigterweise nutzen. Hier erfolgt die Sicherung durch das zusätzlich mit dem (Mobilfunk-)Telefondienstanbieter vereinbarte Kennwort. Wird dem Autorisierungssystem gemäß einer Erweiterung des erfindungsgemäßen Verfahrens zusätzlich die heimische Telefonnummer des Kunden als eine Art Kontonummer mitgeteilt, so ist auch die Bezahlung über übliche Festnetztelefone (z.B. von Telefonzellen ausgehend) möglich.

Das erfindungsgmäße Verfahren ist unabhängig vom jeweiligen Provider des Kunden und kann in jedem Land der Welt mit entsprechender (Mobilfunk-)Telefondienstanbieter-Infrastruktur eingesetzt werden.

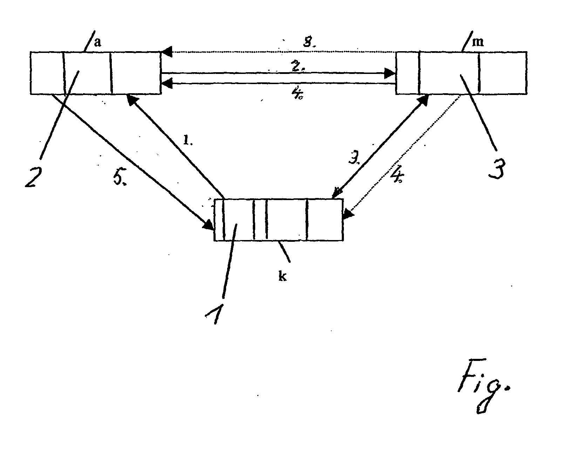

Das erfindungsgemäße Verfahren wird nun anhand der einzigen Figur der Zeichnung erläutert, in der ein typischer Zahlungs-/Kaufvorgang schematisch dargestellt ist.

Wie die einzige Figur zeigt, ist ein Kunde k über mindestens ein Endgerät 1 mit dem Internet verbunden und wünscht aus dem Internetangebot eines Anbieters a ein Produkt oder eine Dienstleistung (kostenpflichtige Information, z.B. Segelwetter-oder Finanzdaten) zum Preis eines Geldbetrages zu erwerben.

Wenn der Kunde k in einem 1. Verfahrensschritt über das Internet seine Willenserklärung zum Kauf des Angebots abgibt (i.d.R. durch Ausfüllen eines elektronischen Bestellformulars), wird vom kundenseitigen Endgerät 1 dem anbieterseitigen Endgerät 2 beim Bestellvorgang der (Mobilfunk-) Telefondienstanbieter m, über den der Kunde k die Zahlung zu autorisieren gedenkt bzw. bei dem letzterer als identifizierter Kunde k existiert, und die (Mobilfunk-)Telefonnummer des Kunden k übermittelt.

In einem 2. Schritt wird daraufhin für die anstehende Bestätigung der Transaktion des noch offenen Kaufvertrages per Internet vom anbieterseitigen Endgerät 2 mindestens die Telefonnummer des Kunden k als die Transaktion identifizierendes Merkmal an einen Autorisierungskomparator 3 eines Autorisierungssystems des (Mobilfunk-)Telefondienstanbieters m übermittelt. Zusätzlich kann für die anstehende Bestätigung der Transaktion des noch offenen Kaufvertrages auch ein vom anbieterseitigen Endgerät 2 generierter Transaktionscode TC über das Internet an den Autoriesiungskomparator 3 des Autorisierungssystems des (Mobilfunk-). Telefondienstanbieters m übermittelt werden. Eine derartige Übermittlung und Anzeige des Transaktionscodes TC über das Internet kann auf darauf aufsetzenden Technologien wie WAP (Wireless Application protocol) und Microbrowser (in Mobilfunkendgeräten eingebaute Web-Browser) erfolgen.

In einem 3. Schritt verbindet sich der Kunde k durch Anwahl einer spezielle Zugangsnummer mittels seines (Mobilfunk-)Telefons nun zu dem Autorisierungskomparator 3 des (Mobilfunk-) Telefondienstanbieters m, wobei der Kunde k über die Anrufidentifizierung des (Mobilfunk-) Telefondienstanbieters m sofort erkannt und über den Autorisierungskomparator 3 des letzteren zur Bestätigung der wartenden Transaktionen aufgefordert wird.

In einem 4. Schritt wird nach Bestätigung der durchzuführenden Transaktion seitens des Kunden k gegenüber dem (Mobilfunk-) Telefondienstanbieter m die vom Autorisierungskomparator 3 des letzteren festgestellte Übereinstimmung der vom anbieterseitigen Endgerät 2 empfangenen (Mobilfunk-)Telefonnummer des Kunden k mit oder Anrufidentifizierung des Kunden k seitens des (Mobilfunk-) Telefondienstanbieters m vom Autorisierungskomparator 3 an das anbieterseitige Endgerät 2 rückgemeldet und zugleich wird der Betrag des Preises des Produktes für das Inkasso seitens des (Mobilfunk-)Telefondienstanbieters m bei diesem registriert. Der Betrag des erworbenen Produktes wird dem Kunden k über seinen (Mobilfunk-) Telefondienstanbieter m in Rechnung gestellt (mit der regulären Abrechnung oder per gesonderter Rechnungslegung).Vom (Mobilfunk-) Telefondienstanbieter m kann eine weitere Clearingstelle - z.B. eine Kreditkartenorganisation - für die Abwicklung des Forderungseinzugs schaltungstechnisch eingebunden werden. Dem Anbieter a wird zu einem definierten Zeitpunkt der Betrag der Transaktion (i.d.R.) auf dessen regulärem Geschäftskonto (oder auf andere Weise) gutgeschrieben, wie der Pfeil 8. in der Fig. symbolisiert.

In einem 5. Schritt wird vom anbieterseitigen Endgerät 2 dem Endgerät 1 des Kunden k über Internet die erfolgreiche Abwicklung der Transaktion und die bevorstehende Auslieferung der Ware signalisiert bzw. bei On-demand-Diensten ein Verbindungsaufbau zum kundenseitigen Endgerät 1 zur Nutzung des Angebots freigeschaltet. Bei Waren erfolgt die Auslieferung selbiger an den Kunden k.

## Patentansprüche

1. Verfahren zur Autorisierung in Datenübertragungssystemen zur Bezahlung von über das Internet angebotenen Waren und/oder Dienstleistungen unter Verwendung mindestens eines eine Transaktion identifizierenden Merkmals, **gekennzeichnet durch** die Kombination der folgenden Verfahrensschritte:
- ein Kunde (k) wählt in einem 1. Schritt über ein kundenseitiges Endgerät (1) im Internetangebot eines Anbieters (a) ein Produkt zum Preis eines Betrages aus unter gleichzeitiger Angabe eines Telefondienstanbieters (m), über den der Kunde (k) zahlen möchte bzw. bei dem dieser als identifizierter Kunde (k) existiert, und seiner Telefonnummer,
- in einem 2. Schritt wird daraufhin per Internet vom anbieterseitigen Endgerät (2) einem Autorisierungskomparator (3) eines Autorisierungssystems des vom Kunden (k) benannten Telefondienstanbieters (m) mindestens die Telefonnummer des Kunden (k) als die Transaktion identifizierendes Merkmal übermittelt,
- in einem 3. Schritt wählt der Kunde (k) eine spezielle Zugangsnummer des Telefondienstanbieters (m) an, wobei der Kunde (k) über die Anrufidentifizierung des Telefondienstanbieters (m) sofort erkannt und über den Autorisierungskomparator (3) des letzteren zur Bestätigung der wartenden Transaktionen aufgefordert wird,
- in einem 4. Schritt wird nach Bestätigung der durchzuführenden Transaktion seitens des Kunden (k) gegenüber dem Telefondienstanbieter (m) die vom Autorisierungskomparator (3) des letzteren festgestellte Übereinstimmung der vom anbieterseitigen Endgerät (2) empfangenen Telefonnummer des Kunden (k) mit der Anrufidentifizierung des Kunden (k) seitens des Telefondienstanbieters (m) vom Autorisierungskomparator (3) an das anbieterseitige Endgerät (2) rückgemeldet und zugleich wird der Betrag des Preises des Produktes für das Inkasso seitens des Telefondienstanbieters (m) bei diesem registriert, und
- in einem 5. Schritt wird vom anbieterseitigen Endgerät (2) dem Endgerät (1) des Kunden (k) über Internet die erfolgreiche Abwicklung der Transaktion und die bevorstehende Auslieferung der Ware signalisiert bzw. ein Verbindungsaufbau zum kundenseitigen Endgerät (1) zur Nutzung des Angebots freigeschaltet.

2. Verfahren nach Anspruch 1, **dadurch gekennzeichnet, daß** kundenseitig ein und dasselbe Gerät als Endgerät (1) für den Verbindungsaufbau zum Internet-Angebot des Anbieters (a) und als Endgerät (4) zum Verbindungsaufbau zum Telefondienstanbieter verwendet wird.

3. Verfahren nach Anspruch 1 und 2, **dadurch gekennzeichnet, daß** die Verbindung an das Internet über GSM/UMTS oder ein Festnetz erfolgt.

4. Verfahren nach Anspruch 1, **dadurch gekennzeichnet, daß** seitens des Kunden (k) mit dem Autorisierungssystem (3) des Telefondienstanbieters (m) per Sprachdialog kommuniziert wird.

5. Verfahren nach Anspruch 4, **dadurch gekennzeichnet, daß** der Sprachdialog durch Audiotext/IVR erfolgt.

6. Verfahren nach Anspruch 1, **dadurch gekennzeichnet, daß** seitens des Kunden (k) mit dem Autorisierungssystem (3) des Telefondienstanbieters (m) nachrichtenbasiert kommuniziert wird.

7. Verfahren nach Anspruch 6, **dadurch gekennzeichnet, daß** seitens des Kunden (k) mit dem Autoriserungssystem (3) des Telefondienstanbieters (m) per SMS kommuniziert wird.

8. Verfahren nach Anspruch 1, **dadurch gekennzeichnet, daß** seitens des Kunde (k) mit dem Autorisierungssystem (3) des Telefondienstanbieters (m) mit einer über das kundenseitige Endgerät (1) nutzbaren Internet-Anwendung kommuniziert wird.

9. Verfahren nach Anspruch 8, **dadurch gekennzeichnet, daß** seitens des Kunden (k) mit dem Autorisierungssystem (3) des Telefondienstanbieters (m) auf der Basis von WAP kommuniziert wird.

10. Verfahren nach einem der vorhergehenden Ansprüche, **dadurch gekennzeichnet, daß** die Autorisierung durch den Autorisierungskomparator (3) des Autorisierungssystems des Telefondienstanbieters (m) nur nach zusätzlicher Identifizierung des Kunden (k) beim Autotrisierungskomparator (3) erfolgt.

11. Verfahren nach einem der vorhergehenden Ansprüche, **dadurch gekennzeichnet, daß** das Autorisierungssystem (3) des Telefondienstanbieters (m) zusätzliche Prüfungen von Restriktionen für Transaktionen des Verfahrens durchführt.

12. Verfahren nach einem der vorhergehenden Ansprüche, **dadurch gekennzeichnet, daß** von dem Autorisierungssystem (3) dem anbieterseitigen Endgerät (2) die Kreditkartendaten des Kunden (k) übermittelt werden.

13. Verfahren nach Anspruch 1 und 12, **dadurch gekennzeichnet, daß** vom Telefondienstanbieter (m) die Transaktionsdaten statthalber des Anbieters (a) für das Inkasso an einen Dritten übermittelt werden.

14. Verfahren nach einem der Ansprüche 1 bis 11, **dadurch gekennzeichnet, daß** vom Kunden (k) über das Autorisierungssystem (3) des Telefondienstanbieters (m) nach einer zusätzlichen Legitimierung die Abrechnung der Transaktion über eine zuvor bestimmte Telefonnummer und somit die dazugehörige Rechnung bestimmt wird.

## Claims

1. Method to give authorization for payment of goods and/or services bought over the Internet in data transmission systems, making use of at least one of the features identifying a transaction, **characterised by** the combination of the following method steps:
- A customer (k) selects a product in a first step, via a customer-side terminal (1), from the Internet range of a supplier (a), at the price of an amount, with the simultaneous indication of a telephone service supplier (m) by means of whom the customer (k) wishes to pay, or with whom this customer exists as an identified customer (k), and his telephone number,
- In a second step, thereupon, via the Internet, at least the telephone number of the customer (k) is transmitted as the feature identifying the transaction, sent from the supplier-side terminal (2) to an authorising comparator (3) of an authorising system of the telephone service supplier (m) named by the customer (k),
- In a third step, the customer (k) dials a special access number of the telephone service supplier (m), whereby the customer (k) is immediately recognised by the call identification of the telephone service supplier (m) and is requested by the authorising comparator (3) of the said supplier to confirm the waiting transaction,
- In a fourth step, after confirmation of the transaction to be carried out on the part of the customer (k) in relation to the telephone service supplier (m), the concordance determined by the authorisation comparator (3) of the said supplier of the telephone number of the customer (k) with the call identification of the customer (k) is reported back on the part of the telephone service supplier (m) from the authorising comparator (3) to the supplier-side terminal (2), and, at the same time, the amount of the price of the product is registered with the telephone service supplier (m) for encashment on his part, and
- In a fifth step, the successful completion of the transaction and the forthcoming delivery of the goods is signalled from the supplier-side terminal (2) to the terminal (1) of the customer (k) via the Internet, or a connection set-up to the customer-side terminal (1) is cleared down in order to make use of the offer.

2. Method according to Claim 1, **characterised in that** on the customer side one and the same terminal is used as the terminal (1) for setting up the connection to the Internet offer of the supplier (a) and as a terminal (4) for setting up the connection to the telephone service supplier.

3. Method according to Claim 1 and 2, **characterised in that** the connection to the Internet is effected via GSM/UMTS or via a fixed network.

4. Method according to Claim 1, **characterised in that** communication is effected on the part of the customer k) with the authorising system (3) of the telephone service supplier (m) by speech dialog.

5. Method according to Claim 4, **characterised in that** the speech dialog is effected via Audiotext/IVR.

6. Method according to Claim 1, **characterised in that** communication is effected on the part of the customer (k) with the authorising system (3) of the telephone service supplier (m) as message-based.

7. Method according to Claim 6, **characterised in that** communication is effected on the part of the customer (k) with the authorising system (3) of the telephone service supplier (m) by SMS.

8. Method according to Claim 1, **characterised in that** communication is effected on the part of the customer (k) with the authorising system (3) of the telephone service supplier (m) with an Internet application which can be used by the customer-side terminal (1)

9. Method according to Claim 9, **characterised in that** communication is effected on the part of the customer (k) with the authorising system (3) of the telephone service supplier (m) on the basis of WAP.

10. Method according to one of the foregoing Claims, **characterised in that** the authorising by the authorising comparator (3) of the authorising system of the telephone service supplier (m) takes place only after additional identification of the customer (k) by the authorising comparator (3).

11. Method according to one of the foregoing Claims, **characterised in that** the authorising system (3) of the telephone service supplier (m) carries out additional checks on restrictions for transactions of the method.

12. Method according to one of the foregoing Claims, **characterised in that** the credit card data of the customer (k) is passed on by the authorising system (3) of the supplier-side terminal (2).

13. Method according to Claims 1 and 12, **characterised in that** the transaction data is passed on for encashment to a third party by the telephone service supplier (m) instead of by the supplier (a).

14. Method according to one of Claims 1 to 11, **characterised in that**, after an additional legitimation, the settlement of the transaction is determined by the customer (k) via the authorising system (3) of the telephone service supplier (m), by means of a previously determined telephone number, and therefore also the invoice relating to it.

## Revendications

1. Procédé pour donner une autorisation pour le paiement de biens et/ou services achetés sur Internet dans des réseaux de transmission de données en utilisant au moins une caractéristique identifiant une transaction, **caractérisé par** la combinaison des étapes de procédé suivantes :
- un client (k) sélectionne à une étape 1 au moyen d'un terminal (1) du côté du client un produit dans l'offre Internet d'un commerçant (a) au prix d'un montant en indiquant simultanément un fournisseur de services téléphoniques (m), par l'intermédiaire duquel le client (k) souhaite payer, respectivement chez lequel celui-ci existe comme client (k) identifié, et son numéro de téléphone,
- à une étape 2, au moins le numéro de téléphone du client (k) est ensuite transmis par Internet à partir du terminal (2) du côté du commerçant comme caractéristique identifiant la transaction à un comparateur d'autorisation (3) d'un système d'autorisation du fournisseur de services téléphoniques (m) désigné par le client (k),
- à une étape 3, le client (k) compose un numéro d'accès spécial du fournisseur de services téléphoniques (m), moyennant quoi le client (k) est aussitôt reconnu au moyen de l'identifiant d'appel du fournisseur de services téléphoniques (m) et est invité par le comparateur d'autorisation (3) de ce dernier à confirmer la transaction en attente,
- à une étape 4, après confirmation de la transaction à effectuer de la part du client (k) par rapport au fournisseur de services téléphoniques (m), la concordance établie par le comparateur d'autorisation (3) de ce dernier entre le numéro de téléphone reçu du terminal (2) du côté du commerçant et l'identifiant d'appel du client (k) du côté du fournisseur de services téléphoniques (m) est rapportée par le comparateur d'autorisation (3) au terminal du côté du commerçant (2) et simultanément, le montant du prix du produit est enregistré en vue de l'encaissement de la part du fournisseur de services téléphoniques (m) chez celui-ci, et
- à une étape 5, le déroulement réussi de la transaction et la livraison à venir du bien sont signalés par Internet par le terminal du commerçant (2) au terminal (1) du client (k), respectivement un établissement de liaison vers le terminal du client (1) afin de profiter de l'offre est déconnecté,

2. Procédé selon la revendication 1, **caractérisé en ce que** du côté du client un seul et même appareil est utilisé comme terminal (1) pour l'établissement de liaison vers l'offre Internet du commerçant (a) et comme terminal (4) pour l'établissement de liaison vers le fournisseur de services téléphoniques.

3. Procédé selon la revendication 1 ou 2, **caractérisé en ce que** la liaison à Internet est effectuée par un réseau GSM/UMTS ou un réseau fixe.

4. Procédé selon la revendication 1, **caractérisé en ce que** le client (k) communique avec le système d'autorisation (3) du fournisseur de services téléphoniques (m) par dialogue vocal.

5. Procédé selon la revendication 4, **caractérisé en ce que** le dialogue vocal a lieu par texte audio/ réponse vocale interactive.

6. Procédé selon la revendication 1, **caractérisé en ce que** le client communique avec le système d'autorisation (3) du fournisseur de services téléphoniques (3) sur la base de messages.

7. Procédé selon la revendication 6, **caractérisé en ce que** le client communique avec le système d'autorisation (3) du fournisseur de services téléphoniques (m) par SMS.

8. Procédé selon la revendication 1, **caractérisé en ce que** le client (k) communique avec le système d'autorisation (3) du fournisseur de services téléphoniques (3) par l'intermédiaire d'une application Internet utilisable par le terminal du client (1).

9. Procédé selon la revendication 8, **caractérisé en ce que** le client (k) communique avec le système d'autorisation (3) du fournisseur de services téléphoniques (3) sur la base du WAP.

10. Procédé selon une des revendications précédentes, **caractérisé en ce que** l'autorisation est effectuée par le comparateur d'autorisation (3) du système d'autorisation du fournisseur de services téléphoniques (3) uniquement après une identification supplémentaire du client (k) dans le comparateur d'autorisation (3).

11. Procédé selon une des revendications précédentes, **caractérisé en ce que** le système d'autorisation (3) du fournisseur de services téléphoniques (m) effectue des contrôles supplémentaires des restrictions aux transactions du procédé.

12. Procédé selon une des revendications précédentes, **caractérisé en ce que** les données de carte de crédit du client (k) sont transmises par le système d' autorisation (3) au terminal du commerçant (2).

13. Procédé selon les revendications 1 et 12, **caractérisé en ce que** les données de transaction pour le compte du commerçant (a) sont transmises par le fournisseur de services téléphoniques (m) à un tiers en vue de l'encaissement.

14. Procédé selon une des revendications 1 à 11, **caractérisé en ce que** le décompte de la transaction est déterminé par le client (k) au moyen d'un numéro de téléphone déterminé à l'avance par l'intermédiaire du système d'autorisation (3) du fournisseur de services téléphoniques (m) après une légitimation supplémentaire et donc la facture afférente est aussi déterminée.
